# FASCICULE DE BREVET EUROPEEN

(11) **EP 4 363 204 B1**
(45) Date de publication et mention de la délivrance du brevet: **25.03.2026**
(21) Numéro de dépôt: 22748394.8
(22) Date de dépôt: 23.06.2022
(51) Int. Cl.: B29C 70/48, B29D 99/00, B29B 11/16, B29C 70/54, B29C 70/88, B29C 31/08, D03D 15/60, G01B 11/16, B23Q 16/12

(54) **MISE EN FORME REPRODUCTIBLE D'UNE ÉBAUCHE FIBREUSE**
REPRODUZIERBARES FORMEN EINER FASERIGEN VORFORM
REPRODUCIBLE SHAPING OF A FIBROUS PREFORM

(30) Priorité: 29.06.2021 US 202163216250 P; 12.04.2022 FR 2203364
(43) Date de publication de la demande: 08.05.2024
(73) Titulaire: SAFRAN AIRCRAFT ENGINES, 75015 Paris (FR)
(72) Inventeur: MARCHAL, Yann, Didier, Simon, 77550 Moissy-Cramayel (FR); YOUNGBERG, Daniel, Rochester, New Hampshire 03867-1705 (US)
(74) Mandataire: Cabinet Beau de Loménie
(86) Numéro de dépôt international: PCT/FR2022/051223
(87) Numéro de publication internationale: WO 2023/275458

(56) Documents cités:
- US-A1- 2007 092 379
- US-B2- 9 457 435

## Description

### Domaine Technique

L'invention concerne la fabrication d'aubes ou d'hélices en matériau composite comprenant un renfort fibreux réalisé par tissage tridimensionnel et densifié par une matrice.

### Technique antérieure

L'utilisation de matériaux composites pour la fabrication d'aubes ou d'hélices, par exemple pour les aubes de turbine à gaz pour moteur aéronautique ou pour turbine industrielle, permet d'obtenir des pièces présentant des performances mécaniques équivalentes voire supérieures à celles réalisées en métal, tout en ayant une masse bien inférieure.

La fabrication de ces aubes ou hélices peut débuter par la réalisation d'une ébauche fibreuse monobloc par tissage tridimensionnel, qui sera ensuite mise en forme de manière à obtenir une préforme fibreuse de l'aube ou de l'hélice à fabriquer. La préforme fibreuse est ensuite densifiée par une matrice pour obtenir la pièce. Un exemple de procédé de fabrication d'une aube ou d'une hélice en matériau composite est par exemple décrit dans le document FR3046564 ou dans le document FR3046563.

L'ébauche fibreuse comprend deux types de fils formant un réseau : les chaînes (qui s'étendent le long de la direction de tissage) et les trames (qui s'étendent transversalement à la direction de tissage). Les chaînes sont sensiblement parallèles entre elles et les trames sont sensiblement parallèles entre elles. Chaînes et trames se croisent généralement à un angle sensiblement droit, formant ainsi un réseau chaînes-trames sensiblement orthogonal.

Toutefois, la forme des aubes ou hélices à fabriquer n'est pas développable. Ainsi, lorsque l'ébauche fibreuse est déformée pour obtenir une préforme fibreuse, on peut observer localement une perte d'orthogonalité du réseau chaînes-trames. Cette perte d'orthogonalité s'appelle le décadrage. L'angle mesurant l'écart entre la position décadrée d'un fil de trame et sa position d'origine est appelé « angle de décadrage ».

Or, plus l'angle de décadrage sera important, plus les propriétés mécaniques de la préforme fibreuse ainsi obtenue seront modifiées. En traction et en compression, un matériau dit décadré est plus souple dans le sens des trames et plus rigides dans le sens des chaînes. Un décadrage important entraînera donc une perte relativement importante des propriétés mécaniques dans le sens trame. Ainsi, il sera nécessaire de fabriquer une préforme fibreuse plus épaisse que ce qu'elle devrait être sans décadrage, ce qui implique un ajout de masse non-négligeable pour les performances de la turbine ou du moteur.

L'étape de déformation de l'ébauche fibreuse en préforme fibreuse peut être réalisée à l'aide de repères visuels, permettant de contrôler la disposition de certains fils de trame ou de chaîne. Une telle méthode est par exemple décrite dans le document US2016288380A1. Cependant, cette étape de déformation de l'ébauche fibreuse en préforme fibreuse est réalisée à la main sans séquence ordonnée de mise en forme, ce qui engendre une forte variabilité dans l'emplacement des zones où il y a du décadrage d'une pièce à l'autre. Finalement, on obtient une forte variabilité des propriétés mécaniques d'une pièce à l'autre, et des géométries différentes dans les pièces obtenues après l'étape d'injection de résine dans la préforme. US 2007/092379 A1 divulgue un procédé de mise en forme d'une ébauche fibreuse s'étendant longitudinalement selon une direction X et transversalement selon une direction Y.

### Exposé de l'invention

La présente invention a pour but de remédier aux inconvénients précités, en proposant une séquence de mise en forme de l'ébauche fibreuse prédéfinie, permettant une déformation adaptée et reproductible de l'ébauche.

A cet effet, l'invention propose un procédé de mise en forme d'une ébauche fibreuse s'étendant longitudinalement selon une direction X et transversalement selon une direction Y, obtenue par tissage tridimensionnel entre une pluralité de fils de chaîne et une pluralité de fils de trame et destinée à former une préforme fibreuse d'aube de turbomachine, l'ébauche fibreuse comprenant une ébauche de pied destinée à former le pied d'aube et une ébauche de pale destinée à former la pale d'aube, l'ébauche fibreuse comprenant une face de référence s'étendant dans la direction Y entre un premier bord et un deuxième bord destinés à former le bord d'attaque et le bord de fuite de l'aube, l'ébauche fibreuse comprenant en outre un fil traceur de chaîne s'étendant sur la face de référence selon la direction X depuis l'ébauche de pied et au moins un fil traceur de trame s'étendant sur la face de référence selon la direction Y entre le premier bord et le deuxième bord, le procédé comprenant au moins :
- le placement de l'ébauche fibreuse dans un moule de mise en forme de sorte à ce que la face de référence soit visible,
- le maintien de l'ébauche de pied dans le moule de mise en forme,
- la projection d'au moins un repère visuel de chaîne sur la face de référence de l'ébauche fibreuse correspondant à un emplacement de référence du fil traceur de chaîne,
- la déformation de l'ébauche de pale à partir du bas de l'ébauche de pale jusqu'au haut de l'ébauche de pale dans la direction X de sorte à faire correspondre le fil traceur de chaîne avec le repère visuel de chaîne,
- la projection d'au moins un repère visuel de trame sur la face de référence de l'ébauche fibreuse correspondant à un emplacement de référence du fil traceur de trame,
- la déformation de l'ébauche de pale dans la direction Y à partir du fil traceur de chaîne jusqu'au premier bord et jusqu'au deuxième bord de l'ébauche de sorte à faire correspondre le fil traceur de trame avec le repère visuel de trame.

Ainsi, le procédé de mise en forme est prédéfini et identique entre chaque opérateur. La déformation du bas vers le haut et du centre vers les bords permet tout particulièrement d'obtenir d'une pièce à l'autre des emplacements identiques pour les zones de décadrage, et donc une meilleure anticipation des zones à plus faibles propriétés mécaniques dans le sens trame.

Selon un aspect particulier de l'invention, l'ébauche fibreuse comprend une pluralité de fils traceurs de trame répartis entre le bas de l'ébauche de pale et le haut de l'ébauche de pale et dans lequel une pluralité de repères visuels de trame correspondant à un emplacement de référence des fils traceurs de trame sont projetés, l'étape suivante étant répétée pour chaque fil traceur de trame dans l'ordre depuis le bas de l'ébauche de pale jusqu'en haut de l'ébauche de pale :
- la déformation de l'ébauche de pale dans la direction Y à partir du fil traceur de chaîne jusqu'au premier bord et jusqu'au deuxième bord de l'ébauche de sorte à faire correspondre le fil traceur de trame avec le repère visuel de trame correspondant,
de sorte à faire correspondre tous les fils traceurs de trame avec le repère visuel de trame correspondant.

Selon un autre aspect particulier de l'invention, la déformation de l'ébauche de pale dans la direction Y est réalisée à partir du fil traceur de chaîne jusqu'au premier bord de l'ébauche de sorte à faire correspondre le fil traceur de trame avec une partie du repère visuel de trame, puis à partir du fil traceur de chaîne jusqu'au deuxième bord de l'ébauche de sorte à faire correspondre le fil traceur de trame avec le repère visuel de trame correspondant.

Selon un autre aspect particulier de l'invention, la projection des repères visuels est effectuée par laser.

Selon un autre aspect particulier de l'invention, le repère visuel correspondant à un fil traceur comprend une ligne de même largeur que ledit fil traceur.

Selon un autre aspect particulier de l'invention, le repère visuel correspondant à un fil traceur comprend deux lignes délimitant une zone correspondant à l'emplacement de référence dudit fil traceur.

Selon un autre aspect particulier de l'invention, l'ébauche fibreuse est humidifiée avant d'être déformée pour faciliter sa déformation.

L'invention concerne en outre un procédé de fabrication d'une aube de turbomachine en matériau composite, comprenant :
- la réalisation d'une ébauche fibreuse par tissage tridimensionnel de fils comprenant une ébauche de pied destinée à former le pied d'aube et une ébauche de pale destinée à former la pale d'aube, l'ébauche fibreuse comprenant une face de référence s'étendant entre un premier bord et un deuxième bord destinés à former le bord d'attaque et le bord de fuite de l'aube, les fils comprenant un fil traceur de chaîne et au moins un fil traceur de trame disposés au moins sur la surface de référence,
- le découpage de l'ébauche fibreuse en laissant intact les fils traceurs situés sur la surface de référence pour obtenir une ébauche fibreuse détourée apte à prendre la forme et les dimensions des parties constitutives de l'aube,
- la mise en forme de l'ébauche fibreuse d'après le procédé de mise en forme selon l'invention pour obtenir une préforme fibreuse formée,
- l'injection dans la préforme fibreuse d'une résine précurseur de matrice afin d'imprégner la préforme fibreuse,
- la transformation de la résine précurseur de matrice dans la préforme fibreuse en matrice de sorte à obtenir une pièce en matériau composite comprenant un renfort fibreux densifié par une matrice et présentant la forme et les dimensions de l'aube.

### Brève description des dessins

[Fig. 1] La figure 1 est une vue schématique en perspective d'une pré-ébauche fibreuse réalisée par tissage tridimensionnel destinée à la réalisation d'une préforme fibreuse.
[Fig. 2] La figure 2 est une vue schématique en perspective d'une ébauche fibreuse obtenue après découpe de la pré-ébauche fibreuse de la figure 1.
[Fig. 3] La figure 3 est une vue schématique d'une aube obtenue après mise en forme et densification de l'ébauche fibreuse de la figure 2.
[Fig. 4] La figure 4 est une vue schématique en perspective d'une moule de mise en forme et d'un projecteur laser selon un mode de réalisation de l'invention.
[Fig. 5] La figure 5 est une vue schématique en perspective de l'ébauche fibreuse de la figure 2 disposée sans être déformée dans le moule de mise en forme de la figure 4.
[Fig. 6] La figure 6 est une vue schématique en perspective de l'ébauche fibreuse de la figure 5 déformée de sorte à faire coïncider le fil traceur de chaîne avec son repère visuel.
[Fig. 7] La figure 7 est une vue schématique en perspective de l'ébauche fibreuse de la figure 6 déformée de sorte à faire coïncider le premier fil traceur de trame avec son repère visuel.
[Fig. 8] La figure 8 est une vue schématique en perspective de l'ébauche fibreuse de la figure 7 déformée de sorte à faire coïncider le deuxième fil traceur de trame avec son repère visuel.
[Fig. 9] La figure 9 est une vue schématique en perspective de l'ébauche fibreuse de la figure 8 déformée de sorte à faire coïncider tous les fils traceurs avec leur repère visuel.

### Description des modes de réalisation

L'invention s'applique de manière générale à la réalisation d'aubes ou d'hélices en matériau composite pour turbomachine, l'aube comprenant un renfort fibreux densifié par une matrice. Il sera décrit ci-après les modes de réalisation pour une aube en matériau composite. On ne sort bien entendu pas du cadre de l'invention si la pièce en matériau composite réalisée est une hélice.

Le procédé de fabrication d'une aube en matériau composite débute par la réalisation d'une ébauche fibreuse obtenue par tissage tridimensionnel ou par tissage multicouche.

Par « tissage tridimensionnel » ou « tissage 3D », on entend ici un mode de tissage par lequel certains au moins des fils de chaîne lient des fils de trame sur plusieurs couches de trame comme par exemple un « tissage interlock ». Par « tissage interlock », on entend ici une armure de tissage 3D dont chaque couche de chaîne lie plusieurs couches de trames avec tous les fils de la même colonne de chaîne ayant le même mouvement dans le plan de l'armure. On notera, d'une manière générale, que les rôles des fils de chaîne et de trame sont interchangeables.

Par « tissage multicouche », on désigne ici un tissage tridimensionnel avec plusieurs couches de trame dont l'armure de base de chaque couche est équivalente à une armure de tissu 2D classique, tel qu'une armure de type toile, satin ou sergé, mais avec certains points de l'armure qui lient les couches de trame entre elles.

La réalisation de l'ébauche fibreuse par tissage 3D permet d'obtenir une liaison entre les couches, et ainsi d'avoir une bonne tenue mécanique de l'ébauche fibreuse, et donc de l'aube en matériau composite, en une seule opération textile.

Un exemple de réalisation d'une ébauche fibreuse est maintenant décrit. Dans cet exemple, le tissage est réalisé sur un métier de type Jacquard.

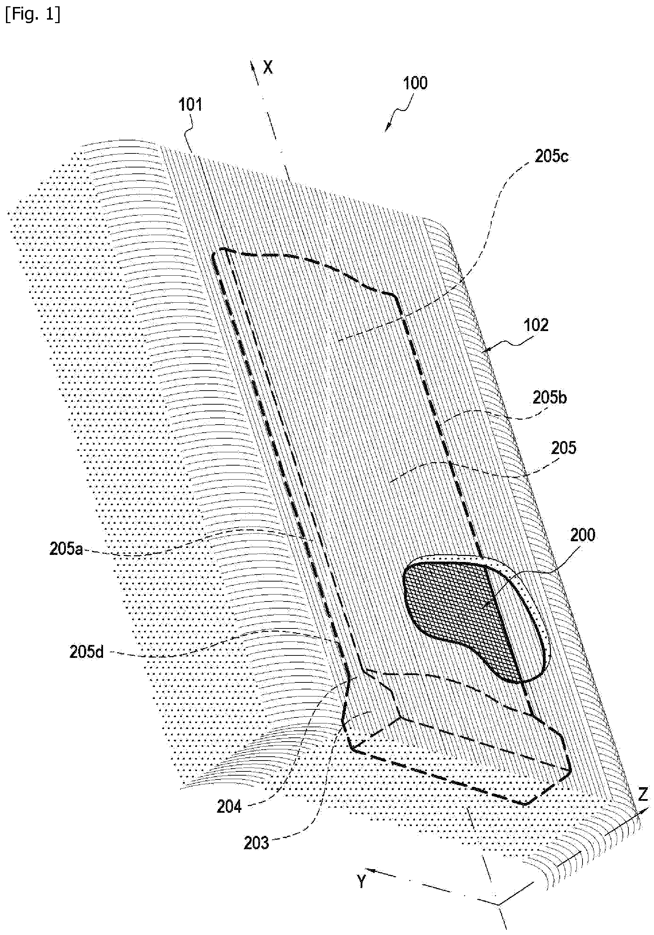

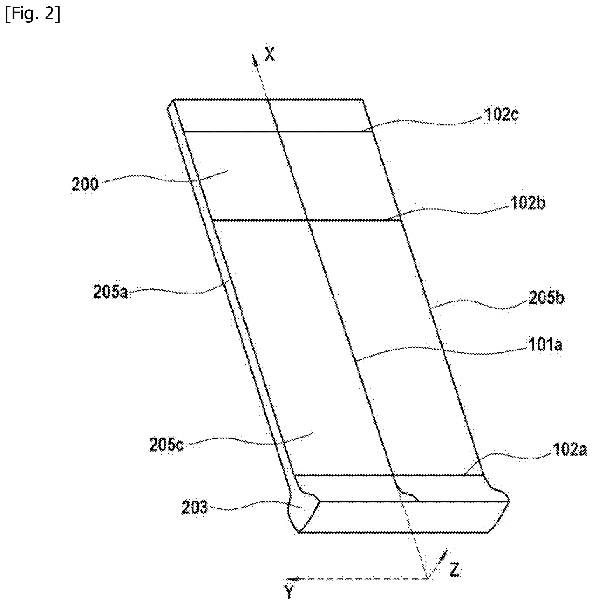

La figure 1 montre schématiquement le tissage d'une pré-ébauche fibreuse 100 à partir de laquelle peut être extraite une ébauche fibreuse 200 (figure 2) permettant d'obtenir, après mise en forme, une préforme de renfort fibreux d'une aube ou d'une hélice de moteur aéronautique.

La pré-ébauche fibreuse 100 est obtenue par tissage tridimensionnel, ou tissage 3D, ou par tissage multicouche réalisé de façon connue au moyen d'un métier à tisser de type Jacquard sur lequel on a disposé un faisceau de fils de chaînes ou torons 101 en une pluralité de couches, les fils de chaînes étant liés par des couches de trame 102 également disposés en une pluralité de couches. On obtient ainsi un réseau chaînes-trames sensiblement orthogonal. Un exemple détaillé de réalisation d'une ébauche fibreuse destinée à former le renfort fibreux d'une aube pour moteur aéronautique à partir d'une ébauche fibreuse tissée 3D est notamment décrit en détail dans les documents US7101154, US7241112 et WO2010/061140.

La pré-ébauche fibreuse 100 est tissée sous forme d'une bande s'étendant de façon générale dans une direction X correspondant à la direction longitudinale de l'aube à réaliser. La pré-ébauche fibreuse 100 s'étend transversalement selon une direction Y, et en épaisseur selon une direction Z perpendiculaire aux directions X et Y.

Dans la pré-ébauche fibreuse 100, l'ébauche fibreuse 200 présente une épaisseur variable déterminée en fonction de l'épaisseur longitudinale et du profil de la pale de l'aube à réaliser. Dans sa partie destinée à former une préforme de pied, l'ébauche fibreuse 200 présente une partie de surépaisseur 203 déterminée en fonction de l'épaisseur du pied de l'aube à réaliser. L'ébauche fibreuse 200 se prolonge par une partie d'épaisseur décroissante 204 destinée à former l'échasse de l'aube puis par une partie 205 destinée à former la pale de l'aube. La partie 205 présente dans la direction Y un profil à épaisseur variable entre son bord 205a destiné à former le bord d'attaque de l'aube et son bord 205b destiné à former le bord de fuite de l'aube à réaliser. La partie 205 s'étend dans la direction Z entre une première face 205c destinée à former l'intrados du profil de l'aube et une deuxième face 205d destinée à former l'extrados du profil de l'aube.

L'ébauche fibreuse 200 est tissée en une seule pièce. Dans les parties de variations d'épaisseur de l'ébauche fibreuse, comme dans la partie d'épaisseur décroissante 204, la diminution d'épaisseur de l'ébauche peut être obtenue en retirant progressivement des couches de trame au cours du tissage. Une fois le tissage de l'ébauche 200 dans la pré-ébauche 100 achevé, on découpe les fils non tissés. On obtient alors l'ébauche 200 illustrée sur la figure 2 et tissée en une seule pièce.

Comme illustré sur la figure 2, l'ébauche fibreuse 200 comprend des fils de structure 101 et 102, utilisés pour le tissage de la structure de l'ébauche, et des fils traceurs identifiables visuellement 101a, 102a, 102b et 102c. Les fils traceurs 101a, 102a, 102b et 102c, incorporés lors du tissage de la pré-ébauche fibreuse 100, sont situés essentiellement sur la surface de l'ébauche fibreuse 200. Le fil traceur 101a est un fil de chaîne. Les fils traceurs 102a, 102b et 102c sont des fils de trame.

Le fil de chaîne traceur 101a peut être placé sensiblement à égale distance des bords 205a et 205b de l'ébauche fibreuse destinés à former le bord d'attaque et le bord de fuite de l'aube ou de l'hélice à fabriquer.

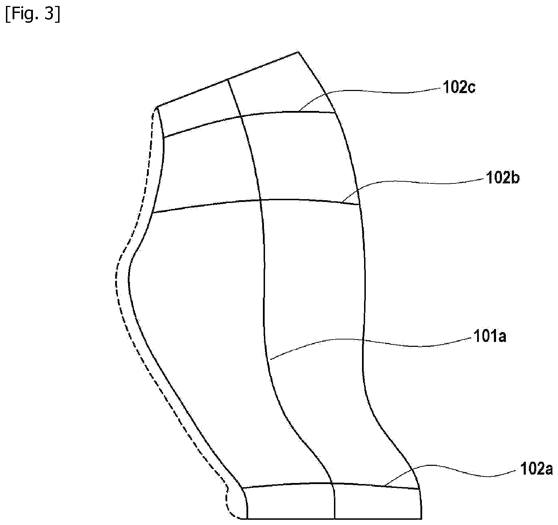

La figure 3 illustre l'emplacement des fils traceurs sur la pièce fabriquée par mise en forme de l'ébauche fibreuse et densification par une matrice de la préforme ainsi obtenue.

Dans l'exemple présenté sur les figures 2 et 3, il n'y a qu'un seul fil traceur de chaîne et trois fils traceurs de trame. On ne sort bien entendu pas du cadre de l'invention si le nombre de fils de trame traceurs est inférieur ou supérieur à trois.

Selon un mode particulier de réalisation de l'invention, les fils de structure peuvent être des fibres de carbone, et les fils traceurs peut être des fibres en verre, en kevlar ou constituées d'un mélange carbone-verre. Ainsi, les fils traceurs apparaissent de couleur claire sur le reste de l'ébauche qui est sombre.

En outre, la présence de ces fils traceurs peut permettre de faciliter ou de standardiser la découpe de la pré-ébauche fibreuse pour obtenir l'ébauche fibreuse. Des exemples d'utilisation de fils traceurs pour procéder à une telle découpe sont par exemple décrits dans le document US2015165571A1.

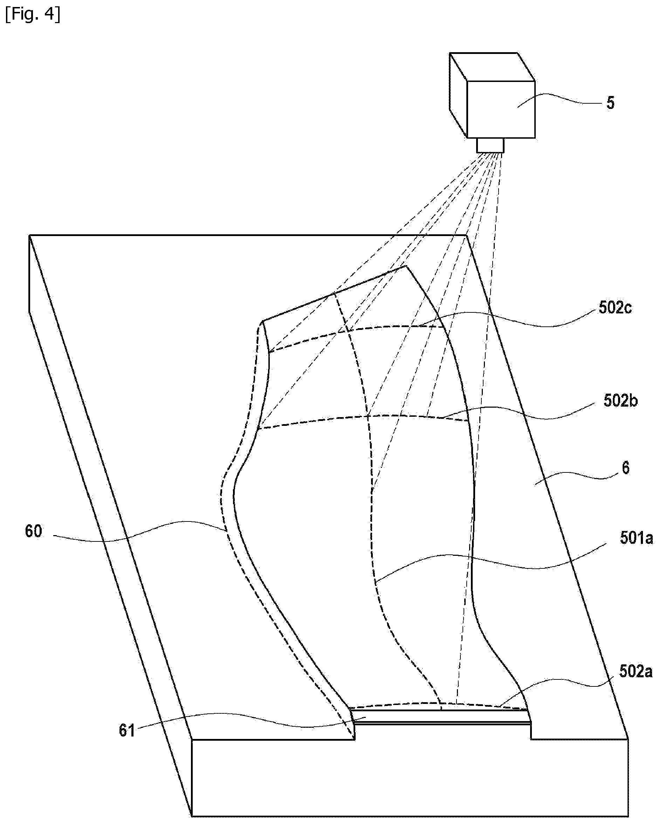

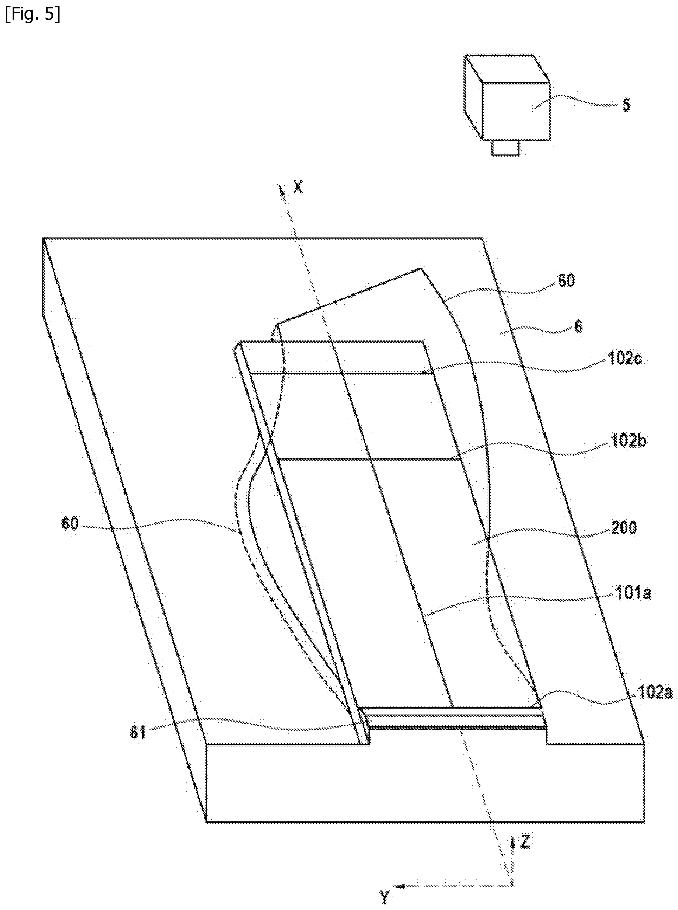

Comme illustré sur les figures 4 et 5, l'ébauche fibreuse 200 est placée dans un moule de mise en forme 6 sans être déformée. Le moule de mise en forme 6 dispose d'une empreinte 60 ayant la forme de la préforme fibreuse souhaitée.

L'ébauche fibreuse 200 est positionnée dans le moule de mise en forme en plaçant la partie 203 de l'ébauche fibreuse destinée à former le pied d'aube dans la partie de l'empreinte 60 du moule 6 destinée à la recevoir.

Selon un mode particulier de réalisation de l'invention, l'ébauche fibreuse 200 ainsi disposée dans le moule sans être déformée peut être humidifiée, par exemple avec de l'eau distillée.

Le pied de l'ébauche fibreuse 200 est ensuite bloqué ou fixé dans le moule 6, par exemple par le biais d'un mors de pré-compaction 61. Le blocage du pied de l'ébauche peut entraîner le pré-compactage dudit pied et permettre de bloquer une partie des fibres du pied dans la position voulue. En bloquant l'ébauche fibreuse par le pied, et non par la partie destinée à former la pale d'aube, on obtient une transition douce entre la zone bloquée et la zone non bloquée, afin d'éviter le flambage des fibres situées à la frontière entre la zone bloquée et la zone non bloquée.

Lorsque l'on dispose l'ébauche fibreuse dans le moule de mise en forme 6, on peut placer l'ébauche dans une configuration qui la déforme en appliquant une rotation autour d'un axe X parallèle à la direction principale tout en maintenant fixe le pied de l'ébauche, ce qui a pour conséquence de vriller la pale de l'ébauche autour de cet axe.

Dans certains cas, on peut aussi prévoir que le moule de mise en forme présente une partie mobile coulissante destinée à venir se positionner conter l'extrémité libre du pied de l'ébauche afin de venir exercer une contrainte réalisant la déformation souhaitée de cette portion de l'ébauche, ou évitant certains types de déformation dans cette partie tandis qu'on exerce une déformation sur d'autres portions de l'ébauche.

Différents systèmes de repérage et de positionnement de l'ébauche peuvent être utilisés, en particulier un projecteur laser 5 (voir la figure 4) qui projette un faisceau lumineux à l'emplacement idéal d'un ou de plusieurs fils traceurs de sorte qu'il soit alors aisé de déplacer en conséquence le fil traceur correspondant pour obtenir le positionnement prédéterminé. Le faisceau lumineux peut être un laser de même largeur que le fil traceur auquel il correspond. Le faisceau lumineux peut être un laser projetant sur une grande largeur délimitant la zone de référence du fil traceur auquel elle correspond. Le faisceau lumineux peut être un laser dédoublé projetant deux lignes délimitant la zone de référence du fil traceur auquel il correspond.

La coïncidence des fils traceurs de l'ébauche fibreuse 200 avec leur repère visuel s'effectue en plusieurs étapes dans un ordre bien déterminé.

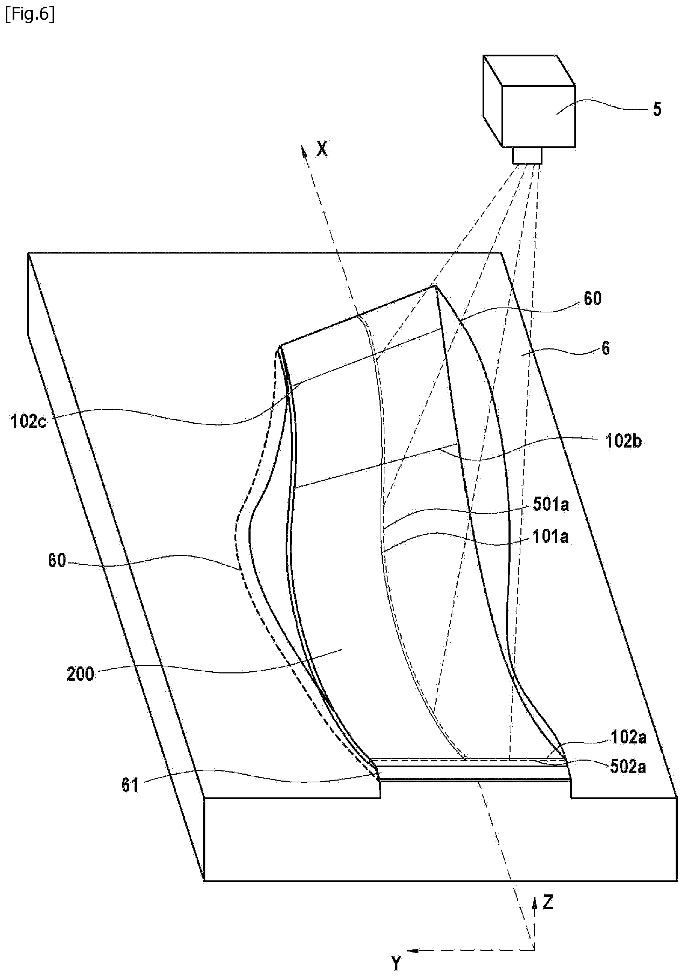

Selon une première étape illustrée sur la figure 6, le projecteur laser 5 commence par indiquer au moins le repère visuel 501a du fil traceur de chaîne. Ce repère visuel 501a du fil traceur de chaîne correspond à la position de référence du fil traceur de chaîne 101a sur la préforme fibreuse mise en forme dans le moule de mise en forme. Ainsi, l'ébauche fibreuse 200 doit être déformée de sorte à faire coïncider le fil traceur de chaîne 101a présent sur sa face avec le repère visuel 501a du fil traceur de chaîne.

On déforme l'ébauche fibreuse 200 depuis le bas de la pale de l'ébauche vers le haut de la pale de l'ébauche, c'est-à-dire dans le sens X des abscisses croissantes, de sorte à superposer le fil traceur de chaîne 101a de l'ébauche 200 avec le repère visuel 501a du fil traceur de chaîne.

En déformant l'ébauche 200 du bas vers le haut, c'est-à-dire du pied de l'ébauche vers le bord supérieur de la pale de l'ébauche, on limite le décadrage au niveau du pied et du bas de la pale. En effet, au fur et à mesure que l'on déforme l'ébauche fibreuse 200 en s'éloignant de la partie bloquée, le décadrage devient de plus en plus important. Les propriétés matériaux étant habituellement moins bonnes au niveau du pied et à sa jonction avec la pale, il est préférable de limiter le décadrage à ces endroits, pour le reporter vers le haut de la pale où les caractéristiques matériaux sont meilleures et permettront une meilleure tolérance au décadrage. En outre, cette déformation du bas de la pale de l'ébauche 200 vers le haut de la pale de l'ébauche 200 facilite la répétabilité de la déformation avec une disposition contrôlée des zones de décadrage.

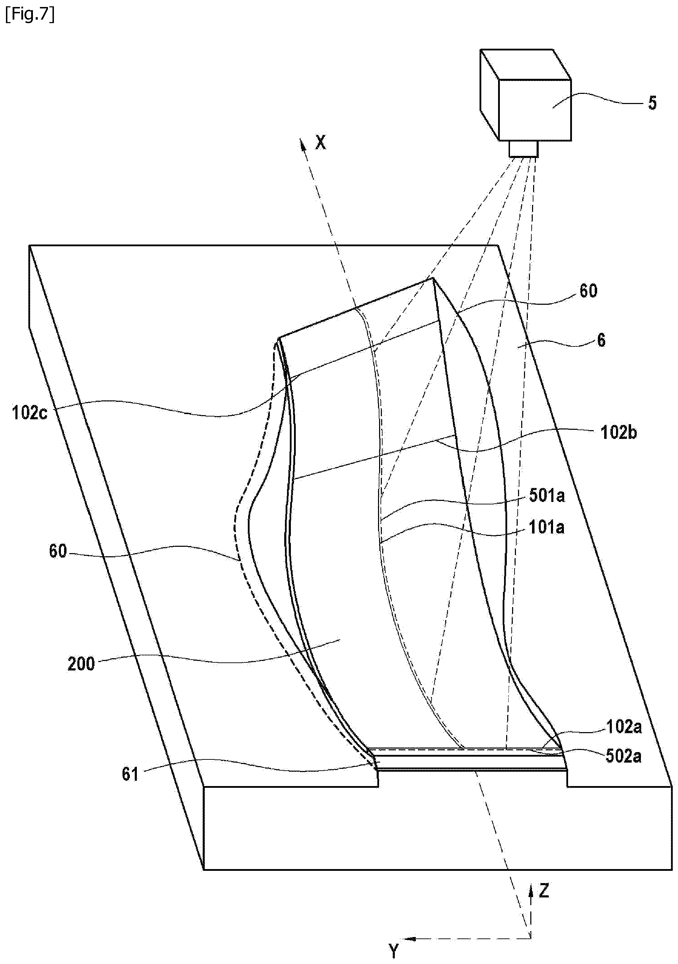

Selon une deuxième étape illustrée sur la figure 7, le projecteur laser 5 indique ensuite au moins le repère visuel 502a du premier fil traceur de trame en partant du bas de la pale de l'ébauche 200, c'est-à-dire du premier fil traceur de trame dans le sens X des abscisses croissantes. Ce repère visuel 502a du premier fil traceur de trame correspond à la position de référence du premier fil traceur de trame 102a sur la préforme fibreuse mise en forme dans le moule de mise en forme. Ainsi, l'ébauche fibreuse 200 doit être déformée de sorte à faire coïncider le premier fil traceur de trame 102a présent sur sa face avec le repère visuel 502a du premier fil traceur de trame. De préférence, le projecteur laser 5 indique également le repère visuel 501a du fil traceur de chaîne.

On déforme l'ébauche fibreuse 200 depuis le fil traceur de chaîne 101a vers le bord 205a de l'ébauche fibreuse 200 destiné à former le bord d'attaque de l'aube, c'est-à-dire dans le sens des ordonnées Y croissantes, de sorte à superposer le premier fil traceur de trame 102a de l'ébauche 200 avec la partie du repère visuel 502a du premier fil traceur de trame située entre le fil traceur de chaîne 101a et le bord 205a de l'ébauche fibreuse 200 destiné à former le bord d'attaque.

On déforme ensuite l'ébauche fibreuse 200 depuis le fil traceur de chaîne 101a vers le bord 205b de l'ébauche fibreuse 200 destiné à former le bord de fuite de l'aube, c'est-à-dire dans le sens des ordonnées Y décroissantes, de sorte à superposer le premier fil traceur de trame 102a de l'ébauche 200 avec la partie du repère visuel 502a du premier fil traceur de trame située entre le fil traceur de chaîne 101a et le bord 205b de l'ébauche fibreuse destiné à former le bord de fuite.

Après avoir déformé l'ébauche fibreuse 200 des deux côtés du fil traceur de chaîne 101a, le premier fil traceur de trame 102a est bien superposé sur toute sa longueur au repère visuel 502a du fil traceur de trame. A la fin de cette deuxième étape, le fil traceur de chaîne 101a reste de préférence superposé à son repère visuel correspondant 501a.

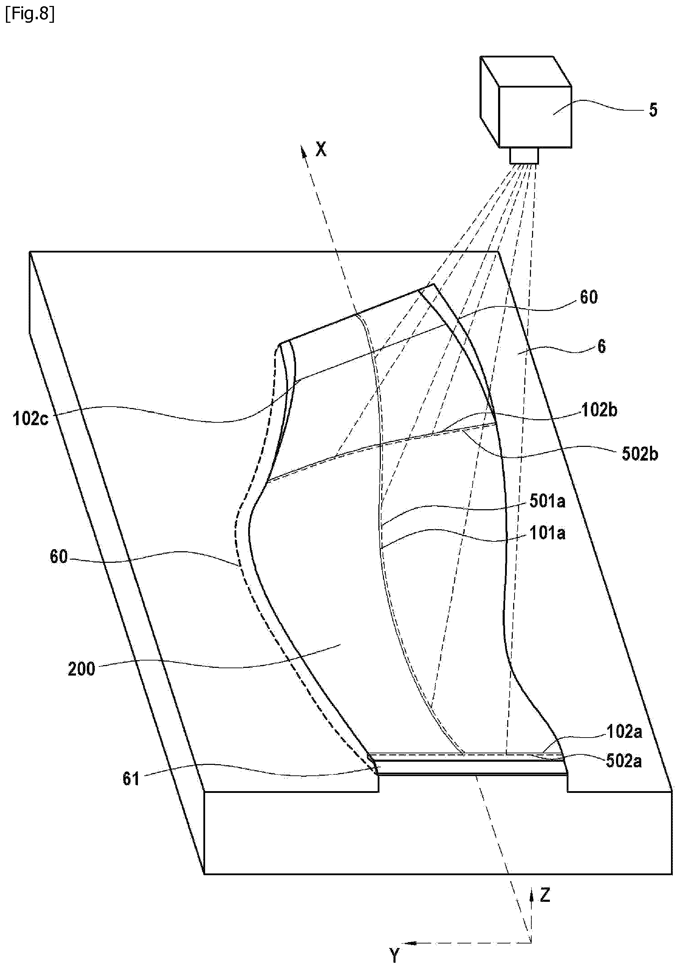

Selon une troisième étape illustrée sur la figure 8, le projecteur laser 5 indique ensuite au moins le repère visuel 502b du deuxième fil traceur de trame en partant du bas de la pale de l'ébauche 200, c'est-à-dire du deuxième fil traceur de trame dans le sens X des abscisses croissantes. Ce repère visuel 502b du deuxième fil traceur de trame correspond à la position de référence du deuxième fil traceur de trame 102b sur la préforme fibreuse mise en forme dans le moule de mise en forme. Ainsi, l'ébauche fibreuse 200 doit être déformée de sorte à faire coïncider le deuxième fil traceur de trame 102b présent sur sa face avec le repère visuel 502b du deuxième fil traceur de trame. De préférence, le projecteur laser 5 indique également le repère visuel 501a du fil traceur de chaîne et le repère 502a du deuxième fil traceur de trame.

On déforme l'ébauche fibreuse 200 depuis le fil traceur de chaîne 101a vers le bord 205a de l'ébauche fibreuse 200 destiné à former le bord d'attaque de l'aube, c'est-à-dire dans le sens des ordonnées Y croissantes, de sorte à superposer le deuxième fil traceur de trame 102b de l'ébauche 200 avec la partie du repère visuel 502b du deuxième fil traceur de trame située entre le fil traceur de chaîne 101a et le bord 205a de l'ébauche fibreuse 200 destiné à former le bord d'attaque.

On déforme ensuite l'ébauche fibreuse 200 depuis le fil traceur de chaîne 101a vers le bord 205b de l'ébauche fibreuse 200 destiné à former le bord de fuite de l'aube, c'est-à-dire dans le sens des ordonnées Y décroissantes, de sorte à superposer le deuxième fil traceur de trame 102b de l'ébauche 200 avec la partie du repère visuel 502b du deuxième fil traceur de trame située entre le fil traceur de chaîne 101a et le bord 205b de l'ébauche fibreuse destiné à former le bord de fuite.

Après avoir déformé l'ébauche fibreuse 200 des deux côtés du fil traceur de chaîne 101a, le deuxième fil traceur de trame 102b est bien superposé sur toute sa longueur au repère visuel correspondant 502b du fil traceur de trame. A la fin de cette troisième étape, le fil traceur de chaîne 101a reste de préférence superposé à son repère visuel correspondant 501a, et le premier fil traceur de trame 102a reste de préférence superposé à son repère visuel 502a.

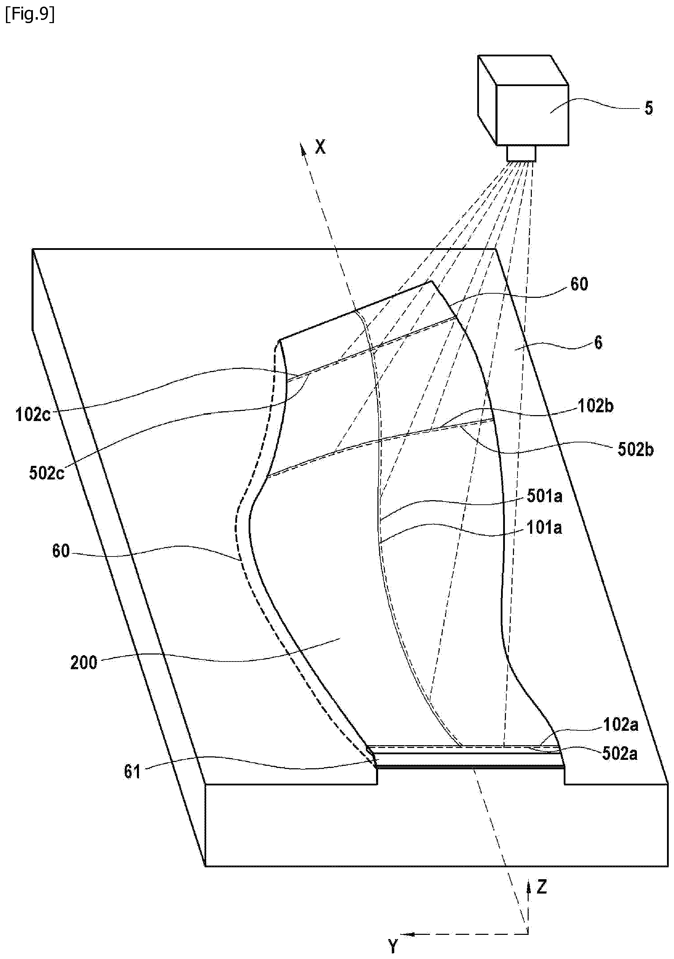

Selon une quatrième étape illustrée sur la figure 9, le projecteur laser 5 indique ensuite au moins le repère visuel 502c du troisième fil traceur de trame en partant du bas de la pale de l'ébauche 200, c'est-à-dire du deuxième fil traceur de trame dans le sens X des abscisses croissantes. Ce repère visuel 502c du troisième fil traceur de trame correspond à la position de référence du troisième fil traceur de trame 102c sur la préforme fibreuse mise en forme dans le moule de mise en forme. Ainsi, l'ébauche fibreuse 200 doit être déformée de sorte à faire coïncider le troisième fil traceur de trame 102c présent sur sa face avec le repère visuel 502c du troisième fil traceur de trame. De préférence, le projecteur laser 5 indique également le repère visuel 501a du fil traceur de chaîne, le repère 502a du deuxième fil traceur de trame et le repère 502b du troisième fil traceur de trame.

On déforme l'ébauche fibreuse 200 depuis le fil traceur de chaîne 101a vers le bord 205a de l'ébauche fibreuse 200 destiné à former le bord d'attaque de l'aube, c'est-à-dire dans le sens des ordonnées Y croissantes, de sorte à superposer le troisième fil traceur de trame 102c de l'ébauche 200 avec la partie du repère visuel 502c du troisième fil traceur de trame située entre le fil traceur de chaîne 101a et le bord 205a de l'ébauche fibreuse 200 destiné à former le bord d'attaque.

On déforme ensuite l'ébauche fibreuse 200 depuis le fil traceur de chaîne 101a vers le bord 205b de l'ébauche fibreuse 200 destiné à former le bord de fuite de l'aube, c'est-à-dire dans le sens des ordonnées Y décroissantes, de sorte à superposer le troisième fil traceur de trame 102c de l'ébauche 200 avec la partie du repère visuel 502c du troisième fil traceur de trame située entre le fil traceur de chaîne 101a et le bord 205b de l'ébauche fibreuse destiné à former le bord de fuite.

Après avoir déformé l'ébauche fibreuse 200 des deux côtés du fil traceur de chaîne 101a, le troisième fil traceur de trame 102c est bien superposé sur toute sa longueur au repère visuel correspondant 502c du fil traceur de trame. A la fin de cette troisième étape, le fil traceur de chaîne 101a reste de préférence superposé à son repère visuel correspondant 501a, le premier fil traceur de trame 102a reste de préférence superposé à son repère visuel 502a et le deuxième fil traceur de trame 102b reste de préférence superposé à son repère visuel 502b.

Dans l'exemple illustré sur les figures 4 à 9, il n'y a qu'un seul fil traceur de chaîne et trois fils traceurs de trame. On ne sort bien entendu pas du cadre de l'invention si le nombre de fils de trame traceurs est inférieur ou supérieur à trois.

Pour chaque fil traceur de trame supplémentaire situé au-dessus du fil traceur de trame précédent dans le sens des abscisses croissantes, on procède de la même manière qu'à la quatrième étape. Le projecteur laser doit afficher le repère visuel correspondant au fil traceur de trame supplémentaire, en affichant de préférence le repère visuel correspondant au fil traceur de chaîne et aux fils traceurs de trame précédents. On déforme ensuite l'ébauche fibreuse 200 depuis le fil traceur de chaîne 101a vers le bord 205a de l'ébauche fibreuse 200 destiné à former le bord d'attaque de l'aube, puis on déforme l'ébauche fibreuse 200 depuis le fil traceur de chaîne 101a vers le bord 205b de l'ébauche fibreuse 200 destiné à former le bord de fuite de l'aube, de sorte à superposer sur toute sa longueur le fil de trame supplémentaire avec le repère visuel correspondant. A la fin de cette étape supplémentaire, le fil traceur de chaîne reste de préférence superposé à son repère visuel correspondant et les précédents fils traceurs de trame restent de préférence superposés à leur repère visuel correspondant.

En déformant l'ébauche fibreuse 200 depuis le fil traceur de chaîne 101a, positionné de préférence vers le centre de l'ébauche fibreuse 200, vers les bords de l'ébauche, on assure une bonne répétabilité de la déformation et une bonne maîtrise de l'emplacement des zones de décadrage, qui seront majoritairement situées sur les bords de l'ébauche.

En déformant l'ébauche fibreuse 200 pour faire correspondre les fils traceurs de trame à leur repère visuel depuis le bas de la pale d'ébauche vers le haut de la pale d'ébauche, on limite le décadrage au niveau du pied et du bas de la pale. En effet, au fur et à mesure que l'on déforme l'ébauche fibreuse 200 en s'éloignant de la partie bloquée, c'est-à-dire le pied d'ébauche, le décadrage devient de plus en plus important. Les propriétés matériaux étant habituellement moins bonnes au niveau du pied et à sa jonction avec la pale, il est préférable de limiter le décadrage à ces endroits, pour le reporter vers le haut de la pale où les caractéristiques matériaux sont meilleures et permettront une meilleure tolérance au décadrage. En outre, cette déformation du bas de la pale de l'ébauche 200 vers le haut de la pale de l'ébauche 200 facilite la répétabilité de la déformation avec une disposition contrôlée des zones de décadrage.

On ne sort bien entendu pas du cadre de l'invention si les rôles du bord de l'ébauche destiné à former le bord d'attaque de l'aube et du bord de l'ébauche destiné à former le bord de fuite sont échangés ou alternés lors des étapes précédentes. La déformation de l'ébauche fibreuse depuis le fil traceur de chaîne vers un premier bord de l'ébauche, puis depuis le fil traceur de chaîne vers un deuxième bord de l'ébauche pour chaque fil traceur de trame simplifie la déformation de l'ébauche fibreuse dans la direction des ordonnées Y. Un opérateur seul peut facilement et rapidement répéter cet enchaînement de déformations tout en conservant une bonne répétabilité et un emplacement des zones de décadrage identiques d'une aube à l'autre. Cet enchaînement de déformations constitue un mode préféré de réalisation de l'invention.

Cependant, on ne sort pas du cadre de l'invention si la déformation de l'ébauche fibreuse dans la direction des ordonnées Y est réalisée simultanément ou alternativement de part et d'autre du fil traceur de chaîne vers chacun des bords pour superposer un fil traceur de trame à son repère visuel correspondant. Toutefois, cet enchaînement de déformations est relativement plus délicat à mettre en œuvre pour un seul opérateur, tout en conservant une bonne répétabilité.

Lorsque l'ébauche fibreuse est entièrement déformée, on peut afficher à nouveau tous les repères visuels des fils traceurs - avec ou sans les tolérances - de sorte à vérifier que tous les fils traceurs sont bien superposés au repère visuel correspondant. Des déformations mineures peuvent être opérées pour assurer une superposition satisfaisante de tous les fils traceurs avec leur repère visuel.

Si l'ébauche fibreuse a été humidifiée avant les étapes de déformation, elle peut être séchée après avoir été déformée.

Après ces étapes de déformation, on peut procéder à une étape de compactage de l'ébauche fibreuse déformée dans un moule de compactage, éventuellement précédée d'une étape de pré-compactage. Ces étapes de pré-compactage ou de compactage sont par exemple décrites dans le document US2016243777A1 ou US2016288380A1. Le moule de compactage peut comprendre le moule de mise en forme.

Ainsi, on obtient une préforme fibreuse après mise en forme et éventuellement compactage de l'ébauche fibreuse.

On procède ensuite à l'imprégnation de la préforme fibreuse par une résine thermodurcissable que l'on polymérise par traitement thermique. Par exemple, on utilise à cet effet le procédé bien connu de moulage par injection ou transfert dit RTM ("Resin Transfert Moulding"). Conformément au procédé RTM, on injecte via un port d'injection une résine, par exemple une résine thermodurcissable, dans l'espace interne occupé par la préforme dans le moule d'injection. Cette configuration permet l'établissement d'un gradient de pression entre la partie inférieure de la préforme où la résine est injectée et la partie supérieure de la préforme située à proximité du port d'évacuation. De cette manière, la résine injectée sensiblement au niveau de la partie inférieure de la préforme va imprégner progressivement l'ensemble de la préforme en circulant dans celle-ci jusqu'au port d'évacuation par lequel le surplus est évacué. Bien entendu, l'outillage de moulage par injection peut comprendre plusieurs ports d'injection et plusieurs ports d'évacuation.

Les résines adaptées pour les procédés RTM sont bien connues. Elles présentent de préférence une faible viscosité pour faciliter leur injection dans les fibres. Le choix de la classe de température et/ou la nature chimique de la résine est déterminé en fonction des sollicitations thermomécaniques auxquelles doit être soumise la pièce. Une fois la résine injectée dans tout le renfort, on procède à sa polymérisation par traitement thermique conformément au procédé RTM.

Après l'injection et la polymérisation, l'aube est démoulée. Elle peut éventuellement subir un cycle de post-cuisson pour améliorer ses caractéristiques thermomécaniques. Au final, l'aube est détourée pour enlever l'excès de résine et des chanfreins peuvent être usinés. On obtient ainsi une pièce composite formée d'un renfort fibreux densifié par une matrice.

Des couches protectrices peuvent être collées sur la pièce composite ainsi obtenue.

## Revendications

1. Procédé de mise en forme d'une ébauche fibreuse (200) s'étendant longitudinalement selon une direction X et transversalement selon une direction Y, obtenue par tissage tridimensionnel entre une pluralité de fils de chaîne (101) et une pluralité de fils de trame (102) et destinée à former une préforme fibreuse d'aube de turbomachine, l'ébauche fibreuse (200) comprenant une ébauche de pied (203) destinée à former le pied d'aube et une ébauche de pale (205) destinée à former la pale d'aube, l'ébauche fibreuse (200) comprenant une face de référence (205c) s'étendant dans la direction Y entre un premier bord (205a) et un deuxième bord (205b) destinés à former le bord d'attaque et le bord de fuite de l'aube, l'ébauche fibreuse (200) comprenant en outre un fil traceur de chaîne (101a) s'étendant sur la face de référence (205c) selon la direction X depuis l'ébauche de pied (203) et au moins un fil traceur de trame (102a, 102b, 102c) s'étendant sur la face de référence (205c) selon la direction Y entre le premier bord (205a) et le deuxième bord (205b), le procédé comprenant au moins :
- le placement de l'ébauche fibreuse (200) dans un moule de mise en forme (6) de sorte à ce que la face de référence (205c) soit visible,
- le maintien de l'ébauche de pied (203) dans le moule de mise en forme (6),
- la projection d'au moins un repère visuel de chaîne (501a) sur la face de référence (205c) de l'ébauche fibreuse (200) correspondant à un emplacement de référence du fil traceur de chaîne (101a),
- la déformation de l'ébauche de pale (205) à partir du bas de l'ébauche de pale jusqu'au haut de l'ébauche de pale dans la direction X de sorte à faire correspondre le fil traceur de chaîne (101a) avec le repère visuel de chaîne (501a),
- la projection d'au moins un repère visuel de trame (502a, 502b, 502c) sur la face de référence (205c) de l'ébauche fibreuse (200) correspondant à un emplacement de référence du fil traceur de trame (102a, 102b, 102c),
- la déformation de l'ébauche de pale (205) dans la direction Y à partir du fil traceur de chaîne (101a) jusqu'au premier bord (205a) et jusqu'au deuxième bord (205b) de l'ébauche (200) de sorte à faire correspondre le fil traceur de trame (102a, 102b, 102c) avec le repère visuel de trame (502a, 502b, 502c).

2. Procédé de mise en forme selon la revendication 1, dans lequel l'ébauche fibreuse (200) comprend une pluralité de fils traceurs de trame (102a, 102b, 102c) répartis entre le bas de l'ébauche de pale (205) et le haut de l'ébauche de pale (205) et dans lequel une pluralité de repères visuels de trame (502a, 502b, 502c) correspondant à un emplacement de référence des fils traceurs de trame (102a, 102b, 102c) sont projetés, l'étape suivante étant répétée pour chaque fil traceur de trame dans l'ordre depuis le bas de l'ébauche de pale jusqu'en haut de l'ébauche de pale :
- la déformation de l'ébauche de pale (205) dans la direction Y à partir du fil traceur de chaîne (101a) jusqu'au premier bord (205a) et jusqu'au deuxième bord (205b) de l'ébauche (200) de sorte à faire correspondre le fil traceur de trame (102a, 102b, 102c) avec le repère visuel de trame (502a, 502b, 502c) correspondant,
de sorte à faire correspondre tous les fils traceurs de trame (102a, 102b, 102c) avec le repère visuel de trame (502a, 502b, 502c) correspondant.

3. Procédé de mise en forme selon la revendication 1 ou 2, dans lequel la déformation de l'ébauche de pale (205) dans la direction Y est réalisée à partir du fil traceur de chaîne (101a) jusqu'au premier bord (205a) de l'ébauche (200) de sorte à faire correspondre le fil traceur de trame (102a, 102b, 102c) avec une partie du repère visuel de trame (502a, 502b, 502c), puis à partir du fil traceur de chaîne (101a) jusqu'au deuxième bord (205b) de l'ébauche (200) de sorte à faire correspondre le fil traceur de trame (102a, 102b, 102c) avec le repère visuel de trame (502a, 502b, 502c) correspondant.

4. Procédé de mise en forme selon l'une quelconque des revendications 1 à 3, dans lequel la projection des repères visuels (501a, 502a, 502b, 502c) est effectuée par laser.

5. Procédé de mise en forme selon l'une quelconque des revendications 1 à 4, dans lequel le repère visuel (501a, 502a, 502b, 502c) correspondant à un fil traceur (101a, 102a, 102b, 102c) comprend une ligne de même largeur que ledit fil traceur.

6. Procédé de mise en forme selon l'une quelconque des revendications 1 à 5, dans lequel le repère visuel (501a, 502a, 502b, 502c) correspondant à un fil traceur (101a, 102a, 102b, 102c) comprend deux lignes délimitant une zone correspondant à l'emplacement de référence dudit fil traceur.

7. Procédé de mise en forme selon l'une quelconque des revendications 1 à 6, dans lequel l'ébauche fibreuse (200) est humidifiée avant d'être déformée pour faciliter sa déformation.

8. Procédé de fabrication d'une aube de turbomachine en matériau composite, comprenant :
- la réalisation d'une ébauche fibreuse (200) par tissage tridimensionnel de fils comprenant une ébauche de pied (203) destinée à former le pied d'aube et une ébauche de pale (205) destinée à former la pale d'aube, l'ébauche fibreuse (200) comprenant une face de référence (205c) s'étendant entre un premier bord (205a) et un deuxième bord (205b) destinés à former le bord d'attaque et le bord de fuite de l'aube, les fils comprenant un fil traceur de chaîne (101a) et au moins un fil traceur de trame (102a, 102b, 102c) disposés au moins sur la surface de référence (205c),
- le découpage de l'ébauche fibreuse (200) en laissant intact les fils traceurs (101a, 102a, 102b, 102c) situés sur la surface de référence (205c) pour obtenir une ébauche fibreuse détourée apte à prendre la forme et les dimensions des parties constitutives de l'aube,
- la mise en forme de l'ébauche fibreuse (200) d'après le procédé de mise en forme selon l'une quelconque des revendications 1 à 7 pour obtenir une préforme fibreuse formée,
- l'injection dans la préforme fibreuse (200) d'une résine précurseur de matrice afin d'imprégner la préforme fibreuse,
- la transformation de la résine précurseur de matrice dans la préforme fibreuse en matrice de sorte à obtenir une pièce en matériau composite comprenant un renfort fibreux densifié par une matrice et présentant la forme et les dimensions de l'aube.

## Patentansprüche

1. Verfahren zur Formgebung eines Faserrohlings (200), der sich der Länge nach gemäß einer Richtung X und der Breite nach gemäß einer Richtung Y erstreckt, und der durch dreidimensionale Verwebung zwischen einer Vielzahl von Kettfäden (101) und einer Vielzahl von Schussfäden (102) erhalten wird und dazu bestimmt ist, eine Faservorform einer Schaufel einer Turbomaschine zu bilden, wobei der Faserrohling (200) einen Fußrohling (203), der dazu bestimmt ist, den Schaufelfuß zu bilden, und einen Blattrohling (205) umfasst, der dazu bestimmt ist, das Schaufelblatt zu bilden, wobei der Faserrohling (200) eine Referenzfläche (205c) umfasst, die sich in der Richtung Y zwischen einer ersten Kante (205a) und einer zweiten Kante (205b) erstreckt, die dazu bestimmt sind, die Vorderkante und die Hinterkante der Schaufel zu bilden, wobei der Faserrohling (200) ferner einen Markierungs-Kettfaden (101a), der sich auf der Referenzfläche (205c) gemäß der Richtung X von dem Fußrohling (203) weg erstreckt, und zumindest einen Markierungs-Schussfaden (102a, 102b, 102c) umfasst, der sich auf der Referenzfläche (205c) gemäß der Richtung Y zwischen der ersten Kante (205a) und der zweiten Kante (205b) erstreckt, wobei das Verfahren zumindest umfasst:
- die Platzierung des Faserrohlings (200) in einer Form zur Formgebung (6) auf solche Weise, dass die Referenzfläche (205c) sichtbar ist,
- das Halten des Fußrohlings (203) in der Form zur Formgebung (6),
- die Projektion zumindest einer visuellen Kett-Referenz (501a) auf die Referenzfläche (205c) des Faserrohlings (200) entsprechend einer Referenzposition des Markierungs-Kettfadens (101a),
- die Verformung des Blattrohlings (205) ausgehend von der Basis des Blattrohlings bis zu dem Scheitel des Blattrohlings in der Richtung X auf eine Weise, um den Markierungs-Kettfaden (101a) mit der visuellen Kett-Referenz (501a) in Übereinstimmung zu bringen,
- die Projektion zumindest einer visuellen Schuss-Referenz (502a, 502b, 502c) auf die Referenzfläche (205c) des Faserrohlings (200) entsprechend einer Referenzposition des Markierungs-Schussfadens (102a, 102b, 102c),
- die Verformung des Blattrohlings (205) in der Richtung Y ausgehend von dem Markierungs-Kettfaden (101a) bis zu der ersten Kante (205a) und bis zu der zweiten Kante (205b) des Rohlings (200) auf eine Weise, um den Markierungs-Schussfaden (102a, 102b, 102c) mit der visuellen Schuss-Referenz (502a, 502b, 502c) in Übereinstimmung zu bringen.

2. Verfahren zur Formgebung nach Anspruch 1, wobei der Faserrohling (200) eine Vielzahl von Markierungs-Schussfäden (102a, 102b, 102c) umfasst, die zwischen der Basis des Blattrohlings (205) und dem Scheitel des Blattrohlings (205) verteilt sind, und wobei eine Vielzahl von visuellen Schuss-Referenzen (502a, 502b, 502c) entsprechend einer Referenzposition der Markierungs-Schussfäden (102a, 102b, 102c) projiziert wird, wobei der folgende Schritt für jeden Markierungs-Schussfaden in der Reihenfolge von der Basis des Blattrohlings bis zu dem Scheitel des Blattrohlings wiederholt wird:
- die Verformung des Blattrohlings (205) in der Richtung Y ausgehend von dem Markierungs-Kettfaden (101a) bis zu der ersten Kante (205a) und bis zu der zweiten Kante (205b) des Rohlings (200) auf eine Weise, um den Markierungs-Schussfaden (102a, 102b, 102c) mit der entsprechenden visuellen Schuss-Referenz (502a, 502b, 502c) in Übereinstimmung zu bringen, auf eine Weise, um alle Markierungs-Schussfäden (102a, 102b, 102c) mit der entsprechenden visuellen Schuss-Referenz (502a, 502b, 502c) in Übereinstimmung zu bringen.

3. Verfahren zur Formgebung nach Anspruch 1 oder 2, wobei die Verformung des Blattrohlings (205) in der Richtung Y ausgehend von dem Markierungs-Kettfaden (101a) bis zu der ersten Kante (205a) des Rohlings (200) auf eine Weise verwirklicht wird, um den Markierungs-Schussfaden (102a, 102b, 102c) mit einem Teil der visuellen Schuss-Referenz (502a, 502b, 502c) in Übereinstimmung zu bringen, anschließend ausgehend von dem Markierungs-Kettfaden (101a) bis zu der zweiten Kante (205b) des Rohlings (200) auf eine Weise, um den Markierungs-Schussfaden (102a, 102b, 102c) mit der entsprechenden visuellen Schuss-Referenz (502a, 502b, 502c) in Übereinstimmung zu bringen.

4. Verfahren zur Formgebung nach einem der Ansprüche 1 bis 3, wobei die Projektion der visuellen Referenzen (501a, 502a, 502b, 502c) mittels Laser erfolgt.

5. Verfahren zur Formgebung nach einem der Ansprüche 1 bis 4, wobei die visuelle Referenz (501a, 502a, 502b, 502c), die einem Markierungsfaden (101a, 102a, 102b, 102c) entspricht, eine Linie mit derselben Breite wie der Markierungsfaden umfasst.

6. Verfahren zur Formgebung nach einem der Ansprüche 1 bis 5, wobei die visuelle Referenz (501a, 502a, 502b, 502c), die einem Markierungsfaden (101a, 102a, 102b, 102c) entspricht, zwei Linien umfasst, die eine Zone begrenzen, die der Referenzposition des Markierungsfadens entspricht.

7. Verfahren zur Formgebung nach einem der Ansprüche 1 bis 6, wobei der Faserrohling (200) befeuchtet wird, bevor er verformt wird, um seine Verformung zu erleichtern.

8. Verfahren zur Herstellung einer Schaufel aus Verbundmaterial für eine Turbomaschine, umfassend:
- die Verwirklichung eines Faserrohlings (200), der einen Fußrohling (203), der dazu bestimmt ist, den Schaufelfuß zu bilden, und einen Blattrohling (205) umfasst, der dazu bestimmt ist, das Schaufelblatt zu bilden, durch dreidimensionale Verwebung von Fäden, wobei der Faserrohling (200) eine Referenzfläche (205c) umfasst, die sich zwischen einer ersten Kante (205a) und einer zweiten Kante (205b) erstreckt, die dazu bestimmt sind, die Vorderkante und die Hinterkante der Schaufel zu bilden, wobei die Fäden einen Markierungs-Kettfaden (101a) und zumindest einen Markierungs-Schussfaden (102a, 102b, 102c) umfassen, die zumindest auf der Referenzoberfläche (205c) angeordnet sind,
- den Zuschnitt des Faserrohlings (200), wobei die Markierungsfäden (101a, 102a, 102b, 102c), die sich auf der Referenzoberfläche (205c) befinden, unversehrt gelassen werden, um einen zugeschnittenen Faserrohling zu erhalten, der dazu geeignet ist, die Form und die Dimensionen der Bestandteile der Schaufel anzunehmen,
- die Formgebung des Faserrohlings (200) gemäß dem Verfahren zur Formgebung nach einem der Ansprüche 1 bis 7, um eine geformte Faservorform zu erhalten,
- die Einspritzung eines Matrix-Vorläuferharzes in die Faservorform (200), um die Faservorform zu imprägnieren,
- die Transformation des Matrix-Vorläuferharzes in der Faservorform in eine Matrix auf eine Weise, um ein Teil aus Verbundmaterial zu erhalten, das eine durch eine Matrix verdichtete Faserverstärkung umfasst und die Form und die Dimensionen der Schaufel aufweist.

## Claims

1. A method for shaping a fiber blank (200) extending longitudinally along a direction X and transversally along a direction Y, obtained by three-dimensional weaving between a plurality of warp threads (101) and a plurality of weft threads (102) and intended to form a fiber preform for a turbomachine blade, the fiber blank (200) comprising a root blank (203) intended to form the blade root and a airfoil blank (205) intended to form the blade airfoil, the fiber blank (200) comprising a reference face (205c) extending in the direction Y between a first edge (205a) and a second edge (205b) intended to form the leading edge and the trailing edge of the blade, the fiber blank (200) further comprising a warp tracer thread (101a) extending over the reference face (205c) along the direction X from the root blank (203) and at least one weft tracer thread (102a, 102b, 102c) extending over the reference face (205c) along the direction Y between the first edge (205a) and the second edge (205b), the method comprising at least:
- the placement of the fiber blank (200) in a shaping mold (6) in such a way that the reference face (205c) is visible,
- the retaining of the root blank (203) in the shaping mold (6),
- the projection of at least one visual reference of the warp (501a) on the reference face (205c) of the fiber blank (200) corresponding to a reference location of the warp tracer thread (101a),
- the deformation of the airfoil blank (205) from the bottom of the airfoil blank to the top of the airfoil blank in the direction X such as to make the warp tracer thread (101a) correspond with the warp visual reference (501a),
- the projection of at least one weft visual reference (502a, 502b, 502c) on the reference face (205c) of the fiber blank (200) corresponding to a reference location of the weft tracer thread (102a, 102b, 102c),
- the deformation of the airfoil blank (205) in the direction Y from the warp tracer thread (101a) to the first edge (205a) and to the second edge (205b) of the blank (200) such as to make the weft tracer thread (102a, 102b, 102c) correspond with the weft visual reference (502a, 502b, 502c).

2. The shaping method as claimed in claim 1, wherein the fiber blank (200) comprises a plurality of weft tracer threads (102a, 102b, 102c) distributed between the bottom of the airfoil blank (205) and the top of the airfoil blank (205) and wherein a plurality of weft visual references (502a, 502b, 502c) corresponding to a reference location of the weft tracer threads (102a, 102b, 102c) are projected, the following step being repeated for each weft tracer thread in order from the bottom of the airfoil blank to the top of the airfoil blank:
- the deformation of the airfoil blank (205) in the direction Y from the warp tracer thread (101a) to the first edge (205a) and to the second edge (205b) of the blank (200) such as to make the weft tracer thread (102a, 102b, 102c) correspond with the corresponding weft visual reference (502a, 502b, 502c),such as to make all the weft tracer threads (102a, 102b, 102c) correspond with the corresponding weft visual references (502a, 502b, 502c).

3. The shaping method as claimed in claim 1 or 2, wherein the deformation of the airfoil blank (205) in the direction Y is done from the warp tracer thread (101a) to the first edge (205a) of the blank (200) such as to make the weft tracer thread (102a, 102b, 102c) correspond with a part of the weft visual reference (502a, 502b, 502c), then from the warp tracer thread (101a) to the second edge (205b) of the blank (200) such as to make the weft tracer thread (102a, 102b, 102c) correspond with the corresponding weft visual reference (502a, 502b, 502c).

4. The shaping method as claimed in any of claims 1 to 3, wherein the projection of the visual references (501a, 502a, 502b, 502c) is done by laser.

5. The shaping method as claimed in any of claims 1 to 4, wherein the visual reference (501a, 502a, 502b, 502c) corresponding to a tracer thread (101a, 102a, 102b, 102c) comprises a line of the same width as said tracer thread.

6. The shaping method as claimed in any of claims 1 to 5, wherein the visual reference (501a, 502a, 502b, 502c) corresponding to a tracer thread (101a, 102a, 102b, 102c) comprises two lines delimiting an area corresponding to the reference location of said tracer thread.

7. The shaping method as claimed in any of claims 1 to 6, wherein the fiber blank (200) is moistened before being deformed to facilitate its deformation.

8. A method for manufacturing a turbomachine blade made of composite material, comprising:
- the production of a fiber blank (200) by three-dimensional weaving of threads comprising a root blank (203) intended to form the blade root and a blade blank (205) intended to form the blade airfoil, the fiber blank (200) comprising a reference face (205c) extending between a first edge (205a) and a second edge (205b) intended to form the leading edge and the trailing edge of the blade, the threads comprising a warp tracer thread (101a) and at least one weft tracer thread (102a, 102b, 102c) disposed at least on the reference surface (205c),
- the cutting-out of the fiber blank (200) while leaving intact the tracer threads (101a, 102a, 102b, 102c) located on the reference surface (205c) to obtain a trimmed fiber blank, able to take the shape and dimensions of the component parts of the blade,
- the shaping of the fiber blank (200) according to the method for shaping as claimed in any of claims 1 to 7 to obtain a shaped fiber preform,
- the injection into the fiber preform (200) of a matrix precursor resin in order to impregnate the fiber preform,
- the transformation of the matrix precursor resin in the fiber preform into a matrix such as to obtain a composite material part comprising a fiber reinforcement densified by a matrix and having the shape and dimensions of the blade.
